# EUROPÄISCHE PATENTSCHRIFT

(11) **EP 3 818 263 B1**
(45) Veröffentlichungstag und Bekanntmachung des Hinweises auf die Patenterteilung: **21.06.2023**
(21) Anmeldenummer: 19728867.3
(22) Anmeldetag: 27.05.2019
(51) Int. Cl.: F03D 1/06, F03D 80/00

(54) **VORRICHTUNG ZUR VERSTELLUNG DES ANSTELLWINKELS EINES ROTORBLATTES EINER WINDENERGIEANLAGE**
DEVICE FOR ADJUSTING THE ANGLE OF ATTACK OF A ROTOR BLADE OF A WIND TURBINE
DISPOSITIF DE RÉGLAGE DE L'ANGLE D'INCIDENCE D'UNE PALE DE ROTOR D'UNE ÉOLIENNE

(30) Priorität: 02.07.2018 DE 102018115911
(43) Veröffentlichungstag der Anmeldung: 12.05.2021
(73) Patentinhaber: VENSYS Energy AG, 66539 Neunkirchen (DE)
(72) Erfinder: HINZ, Uwe, 25795 Weddingstedt (DE); HECKMANN, Thomas, 49377 Vechta (DE)
(74) Vertreter: Patentanwälte Bernhardt / Wolff Partnerschaft mbB
(86) Internationale Anmeldenummer: PCT/DE2019/100466
(87) Internationale Veröffentlichungsnummer: WO 2020/007391

(56) Entgegenhaltungen:
- EP-A1- 3 324 039
- EP-A1- 3 324 041
- WO-A1-2013/156497
- WO-A1-2017/207491

## Beschreibung

Die Erfindung betrifft eine Vorrichtung zur Verstellung des Anstellwinkels eines Rotorblattes einer Windenergieanlage mit horizontaler Rotordrehachse gemäß Oberbegriff des Anspruchs 1.

Eine Verstellvorrichtung für Rotorblätter ist aus der WO 2009/112024 A8 bekannt. Ein offener, durch ein Antriebsrad bewegbarer Hülltriebstrang ist mit seinen freien Enden jeweils am Umfang des Drehlagerrings festgelegt, wobei der Hülltriebstrang anschließend an die festgelegten Enden jeweils mit einem Teil seiner Länge den Drehlagerring umschlingt. Der offene Hülltriebstrang kann nach Lösung der festgelegten Enden von dem Drehlagerring problemlos ausgewechselt werden.

Verstellvorrichtungen mit den Merkmalen des Oberbegriffs des Anspruchs 1 gehen aus der EP 3 324 039 A1, der EP 3 324 041 A1, der WO 2017/207491 A1 sowie der WO 2013/156497 A1 hervor. Den nächstkommenden Stand der Technik bildet die EP 3 324 039 A1. In letzterer Vorrichtung greift ein Antriebsrad an einem dem Rotorblattschaft abgewandten Trum des Hülltriebstrangs an und der Hülltriebstrang geht von dem Antriebsrad über eine erste Flaschenzugrolle in einen Trum des Hülltriebstrangs über, welcher umschlingend gegen den Rotorschaft anliegt. Der Hülltriebstrang ist über eine weitere Flaschenzugrolle am Ende des gegen den Rotorblattschaft anliegenden Trums zurückgeführt. Der dem Rotorblattschaft abgewandte Trum liegt gegen eine Führungsschiene an.

Der Erfindung liegt die Aufgabe zugrunde, gegenüber diesem Stand der Technik eine neue vereinfachte Verstellvorrichtung für Rotorblätter zu schaffen.

Diese Aufgabe wird mit den Merkmalen des Anspruchs 1 gelöst.

Vorteilhaft lässt sich gemäß dieser Erfindungslösung auch ein geschlossener Hülltriebstrang problemlos ohne Demontage des Rotorblatts auswechseln. Ferner erlaubt diese Erfindungslösung einen hohen Umschlingungsgrad des Antriebsrades und damit eine Kraftübertragung mit höherem Sicherheitsfaktor.

Erfindungsgemäß liegt der Hülltriebstrang zwischen dem Antriebsrad und der Umlenkrolle unter Umschlingung des Drehlagerrings insbesondere über einen Winkel > 90 ° (einschl. Verbindungsbereich bis max. 110 °) an dem Drehlagerring an. Der Hülltriebstrang ist in radialem Abstand von dem Drehlagerring von der Umlenkrolle zu dem Antriebsrad zurückgeführt.

Vorzugsweise erfolgt die Rückführung des Hülltriebstrangs von der Umlenkrolle zu dem Antriebsrad über einen Gesamtwinkel zwischen 100 ° und 150 ° über mindestens eine weitere Umlenkrolle. Zum Auswechseln des Hülltriebstrangs lässt sich ein endloser geschlossener Hülltriebstrang problemlos von den Umlenkrollen und dem Antriebsrad demontieren. Wenigstens eine der Umlenkrollen kann als senkrecht zur Rollenachse verschiebbare Spannrolle zur Vorspannung des Hülltriebstrangs ausgebildet sein. Mehrere weitere Umlenkrollen sind vor allem dann erforderlich, wenn der Hülltriebstrang aus Platzgründen in geringem Abstand von dem Drehlagerring zurückgeführt werden muss.

In einer bevorzugten Ausführungsform der Erfindung ist der Hülltriebstrang an der Verbindungsstelle am Umfang des Drehlagerrings durch eine mit dem Drehlagerring vorzugsweise verschraubbare Klemmeinrichtung festgelegt.

Der Hülltriebstrang muss nicht geschlossen sondern kann auch offen sein und an jeweils einem der freien Enden am Umfang des Drehlagerrings festliegen. Ein offener Hülltriebstrang ist noch bequemer als ein geschlossener Strang austauschbar.

Insbesondere können die Enden des Hülltriebstrangs über eine gemeinsame, die Enden gleichzeitig festlegende Klemmeinrichtung verbunden sein, wobei diese Klemmeinrichtung vorteilhaft notwendige Vorspannkräfte des Hülltriebstrangs aufnehmen und so der Drehlager entlasten kann. Bei geschlossenem Hülltriebstrang nimmt der Strang selbst die Übertragung solcher Vorspannkräfte.

In einer redundanten Ausführung der Erfindung sind zwei senkrecht zur Rotordrehachse einander diametral gegenüberliegende, je einen Hülltriebstrang umfassende Verstellvorrichtungen vorgesehen. Vorteilhaft kann bei gleichzeitiger Nutzung der Verstellvorrichtungen die Beanspruchung je Hülltriebstrang verringert und dadurch seine Lebensdauer verlängert sein. Kleinere, weniger beanspruchte Hülltriebstränge erlauben die Verwendung weniger fester Strangmaterialien, z.B. die Verwendung vielseitig verwendbarer Hülltriebstränge aus einer Serienfertigung, Zwei kleinere Hülltriebstränge lassen sich leichter auswechseln. Sofern bei Ausfall einer der beiden Verstellvorrichtungen die andere zur Verstellung und Arretierung des Rotorblatts ausreicht, ergibt sich bei redundanter Ausführung eine deutliche Erhöhung der Betriebssicherheit. Sofern die Montage eines Rotorblatts eine Drehung um dessen Längsachse erfordert, können die beiden Verstellvorrichtungen vorteilhaft hilfsweise zur stufenweisen Drehung des Rotorblatts eingesetzt werden. Beim Austausch eines Hülltriebstrangs hält der andere Hülltriebstrang das Rotorblatt noch in Position.

Die Verstellvorrichtungen können symmetrisch zur Rotordrehachse spiegelbildlich angeordnet sein. Vorzugsweise ist die Umschlingungslänge durch jeden der Hülltriebstränge so bemessen, dass sich ein Verstellbereich von 90 ° ergibt. Vorteilhaft heben sich bei spiegelbildlicher Anordnung zweier Verstellvorrichtungen die durch die Hülltriebstränge auf den Drehlagerring übertragenen Radiallasten gänzlich auf.

Auch das Antriebsrad könnte eine senkrecht zur Radachse verschiebbare Spannrolle bilden. Bei offenem Hülltriebstrang könnte zur Vorspannung wenigstens eine der Positionen, an welchen die Strangenden am Umfang des Drehlagerrings festgelegt sind, tangential verschoben werden.

Die Erfindung ist nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße Vorrichtung zur Verstellung des Anstellwinkels eines Rotorblattes einer Windenergieanlage in spiegelbildlich redundanter Ausführung,
- Fig. 2: eine Teildarstellung einer der Vorrichtung von Fig. 1 ähnlichen Vorrichtung mit geänderter Anordnung von Antriebsrädern, und
- Fig. 3: Teildarstellungen von Vorrichtungen nach der Erfindung mit einem offenen Hülltriebstrang.

Gegen einen Außenring 1 eines im Übrigen nicht gezeigten Drehlagers, durch das ein Rotorflügel einer Windenergieanlage um seine Längsachse 2 drehbar auf einer Rotornabe gelagert ist, liegen zwei einander diametral gegenüberliegende Hülltriebstränge 2 und 2' an. Eine Drehachse 3 des Drehlagers fällt mit der Längsachse des Rotorflügels zusammen. Die im Querschnitt bandförmigen Hülltriebstränge 2,2' sind jeweils über ein Antriebsrad 4 bzw. 4' in einer zur Drehachse 3 des Drehlagers senkrechten Ebene in einander entgegengesetzten Umlaufrichtungen bewegbar, wobei die Hülltriebstränge 2,2' jeweils über Umlenkrollen 5 und 6 bzw. 5' und 6' geführt sind. Die Antriebsräder 4,4' sind jeweils mit einer an der Rotornabe angebrachten, ggf. durch einen Umrichter angesteuerte Motor-/ Getriebeeinheit (nicht gezeigt) verbunden.

Zwischen dem Antriebsrad 4 und der Umlenkrolle 5 bzw. zwischen dem Antriebsrad 4' und der Umlenkrolle 5' liegen die Hülltriebstränge 2,2' unter Umschlingung des Außenrings 1 jeweils gegen den Außenring 1 an und sind an Verbindungsstellen durch eine mit dem Außenring 1 verschraubbare Klemmeinrichtung 8 bzw. 8' an dem Außenring 1 sowohl tangential als auch radial festgelegt. Ein über die Umlenkrolle 6 bzw. 6' etwa im rechten Winkel rückgeführter Strangabschnitt des Hülltriebstrangs 2 bzw. 2' verläuft jeweils in radialem Abstand zu dem Außenring 1.

Auf seiner dem Antriebsrad 4 bzw. 4' zugewandten Seite weist der Hülltriebstrang 2 bzw. 2' ggf. eine Zahnung auf. Während der Hülltriebstrang 2,2' das Antriebsrad 4,4' umschlingt, ist die durch die Umschlingung des Außenrings 1 entstehende Krümmung in entgegengesetzter Richtung verhältnismäßig gering. Entsprechend gering ist die Beanspruchung des Hülltriebstrangs 2,2'.

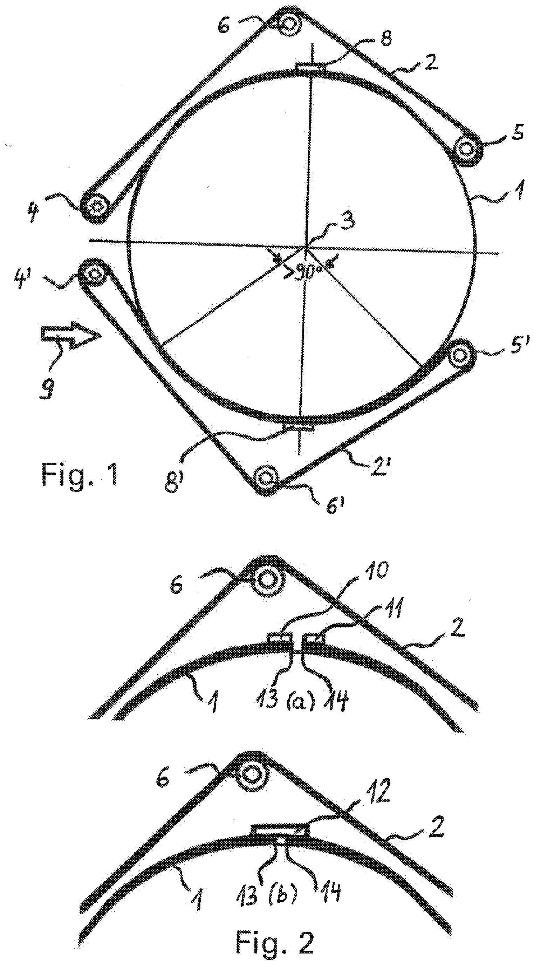

Im Betrieb der Windenergieanlage wird der Rotor der Windenergieanlage zur Windrichtung gemäß Pfeil 9 ausgerichtet, wobei die Antriebsräder 4,4' bezogen auf die Windrichtung die in Fig. 1 gezeigte Position einnehmen.

Zur Verstellung des Anstellwinkels des Rotorblattes zur Windrichtung, die zur Leistungsanpassung der Windenergieanlage bei wechselnder Windgeschwindigkeit erfolgt, können beide Motor-/Getriebeeinheiten mit gleicher Leistung betrieben werden, wobei sich die Beanspruchung der Hülltriebstränge auf beide Stränge verteilt. Vorteilhaft ergibt sich dadurch eine längere Lebensdauer der Hülltriebstränge.

Bei Bedarf genügt zur Verstellung des Anstellwinkels ggf. aber auch einer der Hülltriebstränge.

Zweckmäßig sind die die Hülltriebstränge 2,2' aufweisenden Verstellvorrichtungen so dimensioniert, dass bei Ausfall einer der Verstellvorrichtungen, z.B. durch Bruch des Hülltriebstrangs, die andere Verstellvorrichtung das Rotorblatt noch in eine sichere Stellung drehen und dort halten kann. Eine Dimensionierung jeder Verstellvorrichtung für den Dauerbetrieb nach Ausfall einer Vorrichtung wäre unwirtschaftlich. Nach sensorischer Erfassung des Schadens würde die Anlage aus Sicherheitsgründen ohnehin unverzüglich abgeschaltet und z.B. ein defekter Hülltriebstrang durch einen intakten ersetzt.

Bei der Verstellung des Rotorblatts in der einen oder anderen Drehrichtung bewegt sich die Verbindungsstelle 8 bzw. 8' entweder in Richtung zu dem Antriebsrad 4 bzw. 4' oder zu der Umlenkrolle 5 bzw. 5' hin. Die in Fig. 1 gezeigte Ausgangsposition der Klemmeinrichtungen 8,8' lässt eine Winkelverstellung des Rotorblatts um etwa ± 45 ° zu. Ein solcher Verstellbereich ist für den Betrieb einer Windenergieanlage ausreichend.

In dem Ausführungsbeispiel von Fig. 1 handelt es sich bei dem Hülltriebstrang 2,2' um einen endlosen, geschlossenen Strang. Alternativ kann der Hülltriebstrang gemäß Fig. 2a offen und an jedem Ende 13 bzw. 14 durch eine Klemmeinrichtung 10 bzw. 11 an dem Außenring 1 festgelegt sein. Es versteht sich, dass gemäß Fig. 2b ein einziges durchgehendes Klemmelement 12 zur Festlegung beider Enden des offenen Hülltriebstrangs vorgesehen sein kann, wobei die gemeinsame Klemmeinrichtung 12 vorteilhaft im Zuge einer notwendigen Spannung des Hülltriebstrangs auftretende Zugkräfte aufnehmen kann, so dass das Drehlager entsprechend weniger belastet wird.

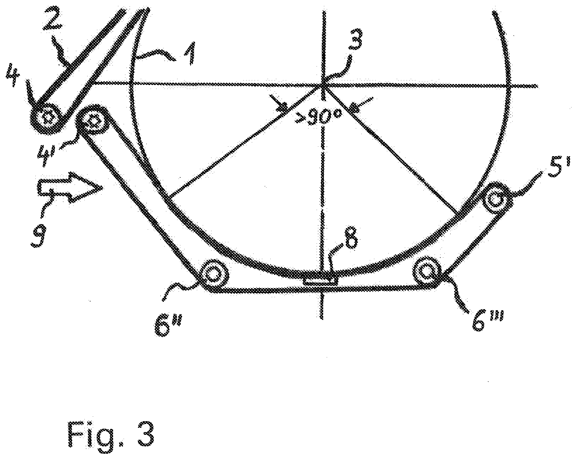

Wie aus Fig. 3 hervorgeht, kann von der in Fig. 1 gezeigten spiegelbildlichen Anordnung der Verstellvorrichtungen abgewichen werden, wobei, wie in Fig. 3 gezeigt, die Antriebsräder bezogen auf die Windrichtung bzw. Rotordrehachse gemäß Pfeil 9 z.B. hintereinander und seitlich versetzt angeordnet werden können. Solche Abweichungen können z.B. dadurch veranlasst sein, dass auf der Rotornabe auf diese Weise mehr Platz für die Anordnung von Motor-/Getriebeeinheiten oder/und Umlenkrollen bzw. Spannrollen geschafft werden kann. Der Verstellbereich ist um so höher, je enger das Antriebsrad 4' und die Rolle 5,5' bei dem Außenring 1 angeordnet sind.

Eine weitere Abweichung gegenüber dem Ausführungsbeispiel von Fig. 1 besteht in einer Rückführung des Hülltriebstrangs über zwei Rollen 6" und 6‴.

## Patentansprüche

1. Vorrichtung zur Verstellung des Anstellwinkels eines Rotorblattes einer Windenergieanlage mit horizontaler Rotordrehachse, mit einem flexiblen, durch ein Antriebsrad (4,4') bewegbaren Hülltriebstrang (2,2'), über den das Rotorblatt in entgegengesetzten Richtungen um seine Längsachse (3) drehbar ist, wobei der Hülltriebstrang (2,2') an einem Endstück des Rotorblatts anliegt und an zumindest einer Verbindungsstelle am Umfang des Endstücks zumindest tangential festgelegt ist und der Hülltriebstrang (2,2') mit einer dem Endstück abgewandten Seite an dem Antriebsrad (4,4') anliegt,
**dadurch gekennzeichnet,**
**dass** das Endstück des Rotorblatts durch einen Drehlagerring (1) gebildet ist, dass der Hülltriebstrang (2,2') zwischen dem Antriebsrad (4,4') und einer Umlenkrolle (5,5') unter teilweiser Umschlingung des Drehlagerrings (1) ausschließlich gegen den Drehlagerring (1) anliegt und
**dass** der Hülltriebstrang (2,2') von der Umlenkrolle (5,5') über mindestens eine weitere, den Hülltriebstrang in radialem Abstand von dem Drehlagerring (1) haltende Umlenkrolle (6,6',6",6‴) zu dem Antriebsrad (4,4') zurückgeführt und durch das Antriebsrad (4,4') zu der ersteren Umlenkrolle (5,5') hin umgelenkt ist.

2. Vorrichtung nach Anspruch 1,
**dadurch gekennzeichnet,**
**dass** der Hülltriebstrang (2,2') den Drehlagerring (1) in einem Winkel > 90 ° umschlingt und der Umschlingungswinkel einschl. der Verbindungsstelle max. 110° beträgt.

3. Vorrichtung nach Anspruch 2,
**dadurch gekennzeichnet,**
**dass** der Hülltriebstrang (2,2') über die mindestens eine weitere Umlenkrolle (6,6') über einen Gesamtwinkel zwischen 100 ° und 150 ° von der Umlenkrolle (5,5') zu dem Antriebsrad (4,4') zurückgeführt ist.

4. Vorrichtung nach einem der Ansprüche 1 bis 3,
**dadurch gekennzeichnet,**
**dass** der Hülltriebstrang (2,2') an der Verbindungstelle am Umfang des Drehlagerrings (1) durch eine mit dem Drehlagerring (1) vorzugsweise durch Verschraubung verbindbare Klemmeinrichtung (8,8') festgelegt ist.

5. Vorrichtung nach einem der Ansprüche 1 bis 4,
**dadurch gekennzeichnet,**
**dass** der Hülltriebstrang (2,2') offen, mit zwei Enden (13,14) ausgebildet und an jeweils einem Ende am Umfang des Drehlagerrings (1) festgelegt ist, vorzugsweise durch eine Klemmeinrichtung (10 - 12).

6. Vorrichtung nach Anspruch 5,
**dadurch gekennzeichnet,**
**dass** die Enden (13,14) des Hüllantriebstrangs über eine gemeinsame, gleichzeitig beide Enden des Hülltriebstrangs festlegende, Zugkräfte in Stranglängsrichtung übertragende Klemmeinrichtung (12) verbunden sind.

7. Vorrichtung nach einem der Ansprüche 3 bis 6,
**dadurch gekennzeichnet,**
**dass** wenigstens eine der Umlenkrollen (5,5';6,6';5",6") oder/und das Antriebsrad (4,4') als senkrecht zur Rollenachse verschiebbare Spannrolle zur Vorspannung des Hülltriebstrangs (2,2') ausgebildet ist.

8. Vorrichtung nach einem der Ansprüche 5 bis 6, oder nach Anspruch 7, wenn abhängig von einem der Ansprüche 5-6,
**dadurch gekennzeichnet,**
**dass** der offene Hülltriebstrang (2,2') durch tangentiale Verschiebung von wenigstens einem seiner am Umfang des Drehlagerrings (1) festzulegenden Enden (13,14) vorspannbar ist.

9. Anordnung zur Verstellung des Anstellwinkels eines Rotorblattes einer Windenergieanlage,
**dadurch gekennzeichnet,**
**dass** senkrecht zur Windrichtung bzw. Rotorachse diametral zu dem Drehlagerring (1) in redundanter Anordnung zwei Vorrichtungen nach einem der Ansprüche 1 bis 6 vorgesehen sind.

10. Anordnung nach Anspruch 9,
**dadurch gekennzeichnet,**
**dass** die Vorrichtungen spiegelbildlich zueinander angeordnet sind.

## Claims

1. Apparatus for adjusting the angle of attack of a rotor blade of a wind turbine with a horizontal rotor axis of rotation, having a flexible envelope drive strand (2, 2') which is able to be moved by a drive wheel (4, 4') and via which the rotor blade is able to be rotated in opposite directions about its longitudinal axis (3), wherein the envelope drive strand (2, 2') bears against an end piece of the rotor blade and is fixed at least tangentially at at least one connecting point on the circumference of the end piece, and the envelope drive strand (2, 2') bears against the drive wheel (4, 4') by way of a side facing away from the end piece,
**characterized**
**in that** the end piece of the rotor blade is formed by a rotary-bearing ring (1),
**in that**, between the drive wheel (4, 4') and a deflection roller (5, 5'), the envelope drive strand (2, 2') exclusively bears against the rotary-bearing ring (1), while partially wrapping around the rotary-bearing ring (1), and
**in that** the envelope drive strand (2, 2') is guided from the deflection roller (5, 5') back to the drive wheel (4, 4') via at least one further deflection roller (6, 6', 6", 6‴), which keeps the envelope drive strand radially spaced apart from the rotary-bearing ring (1), and is deflected towards the first deflection roller (5, 5') by the drive wheel (4, 4').

2. Apparatus according to Claim 1,
**characterized**
**in that** the envelope drive strand (2, 2') wraps around the rotary-bearing ring (1) over an angle > 90°, and the wrap-around angle, with the connecting point included, is at most 110°.

3. Apparatus according to Claim 2,
**characterized**
**in that** the envelope drive strand (2, 2') is guided from the deflection roller (5, 5') back to the drive wheel (4, 4') via the at least one further deflection roller (6, 6') over a total angle of between 100° and 150°.

4. Apparatus according to one of Claims 1 to 3,
**characterized**
**in that** the envelope drive strand (2, 2') is fixed on the circumference of the rotary-bearing ring (1) at the connecting point by a clamping device (8, 8') which is connectable, preferably by screwing, to the rotary-bearing ring (1).

5. Apparatus according to one of Claims 1 to 4,
**characterized**
**in that** the envelope drive strand (2, 2') is designed so as to be open with two ends (13, 14) and is fixed, preferably by a clamping device (10-12), on the circumference of the rotary-bearing ring (1) at each end.

6. Apparatus according to Claim 5,
**characterized**
**in that** the ends (13, 14) of the envelope drive strand are connected via a common clamping device (12) which simultaneously fixes both ends of the envelope drive strand and which transmits tensile forces in a strand longitudinal direction.

7. Apparatus according to one of Claims 3 to 6, **characterized**
**in that** at least one of the deflection rollers (5, 5'; 6, 6'; 5", 6") and/or the drive wheel (4, 4') are/is designed as a tensioning roller for pretensioning the envelope drive strand (2, 2'), which tensioning roller is displaceable perpendicularly to the roller axis.

8. Apparatus according to either of Claims 5 and 6, or according to Claim 7 if dependent on either of Claims 5 and 6,
**characterized**
**in that** the open envelope drive strand (2, 2') is able to be pre-stressed by way of tangential displacement of at least one of its ends (13, 14), which are to be fixed on the circumference of the rotary-bearing ring (1).

9. Arrangement for adjusting the angle of attack of a rotor blade of a wind turbine,
**characterized**
**in that** two apparatuses according to one of Claims 1 to 6 are provided in a redundant arrangement diametrically in relation to the rotary-bearing ring (1) perpendicularly to the wind direction or rotor axis.

10. Arrangement according to Claim 9,
**characterized**
**in that** the apparatuses are arranged so as to be mirror-symmetrical in relation to one another.

## Revendications

1. Dispositif de réglage de l'angle d'attaque d'une pale de rotor d'une éolienne à axe de rotation de rotor horizontal, comprenant une courroie d'entraînement enveloppante (2, 2') flexible, pouvant être déplacée par une roue d'entraînement (4, 4'), par l'intermédiaire de laquelle la pale de rotor peut tourner autour de son axe longitudinal (3) dans des directions opposées, la courroie d'entraînement enveloppante (2, 2') étant en appui contre une pièce d'extrémité de la pale de rotor et étant fixée au moins tangentiellement en au moins un point de liaison à la périphérie de la pièce d'extrémité, et la courroie d'entraînement enveloppante (2, 2') étant en appui contre la roue d'entraînement (4, 4') par un côté détourné de la pièce d'extrémité,
**caractérisé en ce que**
la pièce d'extrémité de la pale de rotor est formée par une bague de palier rotatif (1),
entre la roue d'entraînement (4, 4') et une poulie de renvoi (5, 5'), la courroie d'entraînement enveloppante (2, 2') est en appui exclusivement contre la bague de palier rotatif (1) en entourant partiellement la bague de palier rotatif (1), et
la courroie d'entraînement enveloppante (2, 2') est ramenée de la poulie de renvoi (5, 5') vers la roue d'entraînement (4, 4') en passant par au moins une autre poulie de renvoi (6, 6', 6", 6‴) qui maintient la courroie d'entraînement enveloppante à une distance radiale de la bague de palier rotatif (1), et est renvoyée vers la première poulie de renvoi (5, 5') par la roue d'entraînement (4, 4').

2. Dispositif selon la revendication 1,
**caractérisé en ce que**
la courroie d'entraînement enveloppante (2, 2') entoure la bague de palier rotatif (1) selon un angle > 90°, et l'angle d'enroulement, y compris le point de liaison, est de 110° au maximum.

3. Dispositif selon la revendication 2,
**caractérisé en ce que**
la courroie d'entraînement enveloppante (2, 2') est ramenée de la poulie de renvoi (5, 5') vers la roue d'entraînement (4, 4') en passant par ladite au moins une autre poulie de renvoi (6, 6') sur un angle total compris entre 100° et 150°.

4. Dispositif selon l'une des revendications 1 à 3,
**caractérisé en ce que**
la courroie d'entraînement enveloppante (2, 2') est fixée au niveau du point de liaison à la périphérie de la bague de palier rotatif (1) par un organe de serrage (8, 8') pouvant être relié à la bague de palier rotatif (1), de préférence par vissage.

5. Dispositif selon l'une des revendications 1 à 4,
**caractérisé en ce que**
la courroie d'entraînement enveloppante (2, 2') est ouverte, formée avec deux extrémités (13, 14), et fixée par chaque extrémité à la périphérie de la bague de palier rotatif (1), de préférence par un organe de serrage (10 - 12).

6. Dispositif selon la revendication 5,
**caractérisé en ce que**
les extrémités (13, 14) de la courroie d'entraînement enveloppante sont reliées par un organe de serrage (12) commun, fixant simultanément les deux extrémités de la courroie d'entraînement enveloppante et transmettant les forces de traction dans la direction longitudinale de la courroie.

7. Dispositif selon l'une des revendications 3 à 6,
**caractérisé en ce que**
l'une au moins des poulies de renvoi (5, 5' ; 6, 6' ; 5", 6") ou/et la roue d'entraînement (4, 4') est réalisée sous forme de poulie de tension, mobile en translation perpendiculairement à l'axe de la poulie et destinée à précontraindre la courroie d'entraînement enveloppante (2, 2').

8. Dispositif selon l'une des revendications 5 à 6 ou selon la revendication 7 prise en dépendance de l'une des revendications 5 à 6,
**caractérisé en ce que**
la courroie d'entraînement enveloppante (2, 2') ouverte peut être précontrainte par translation tangentielle de l'une au moins de ses extrémités (13, 14) à fixer à la périphérie de la bague de palier rotatif (1).

9. Ensemble de réglage de l'angle d'attaque d'une pale de rotor d'une éolienne,
**caractérisé en ce que**
perpendiculairement à la direction du vent ou à l'axe du rotor, diamétralement à la bague de palier rotatif (1), deux dispositifs selon l'une des revendications 1 à 6 sont prévus en disposition redondante.

10. Ensemble selon la revendication 9,
**caractérisé en ce que**
les dispositifs sont disposés de manière symétrique l'un par rapport à l'autre.
